Europäisches Patentamt

European Patent Office

Office européen des brevets

(11) Publication number: **0 162 926**

A1

# EUROPEAN PATENT APPLICATION

published in accordance with Art. 158(3) EPC

(21) Application number: **84903984.7**

(22) Date of filing: **26.10.84**

Data of the international application taken as a basis:

(86) International application number:
**PCT/JP84/00514**

(87) International publication number:
**WO85/01902 (09.05.85 85/11)**

(51) Int. Cl.⁴: **B 23 H 7/36**

(30) Priority: **27.10.83 JP 199996/83**

(43) Date of publication of application:
**04.12.85 Bulletin 85/49**

(84) Designated Contracting States:
**CH DE GB LI**

(71) Applicant: **FANUC LTD**
**3580, Shibokusa Aza-Komanba Oshino-mura**
**Minamitsuru-gun Yamanashi 401-05(JP)**

(72) Inventor: **ASO, Toshiyuki**
**208, Fanuc Hinoshataku 3-27, Tamadaira**
**Hino-shi Tokyo 191(JP)**

(72) Inventor: **OBARA, Haruki**
**844-7, Hashimoto, Sagamihara-shi**
**Kanagawa 229(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) APPARATUS FOR SUPPLYING WORKING FLUID IN ELECTRIC DISCHARGE MACHINE.

(57) A working fluid supplying apparatus for an electric discharge machine is capable of controlling the fluid pressure of a working fluid in accordance with electric discharge machining conditions and reduces the loss of energy consumed in a working fluid supply pump. Pumps ($P_1$ to $P_3$) are connected in series on a pipeline (9) for supplying a working fluid from a working fluid tank (1) to a machining area. The pipeline portions between the adjacent pumps are connected to the tank (1) through respective valves ($V_1$, $V_2$). When the pumps ($P_1$ to $P_3$) on the upstream side are in an operative state, the valves ($V_1$, $V_2$) on the downstream side are closed. The pumps ($P_1$ to $P_3$) are selectively operated in accordance with a required working fluid pressure.

FIG 2

0162926

S P E C I F I C A T I O N

WORKING FLUID SUPPLY APPARATUS IN ELECTRIC
DISCHARGE MACHINE

Technical Field

The present invention relates to a working fluid supply apparatus in an electric discharge machine.

Background Art

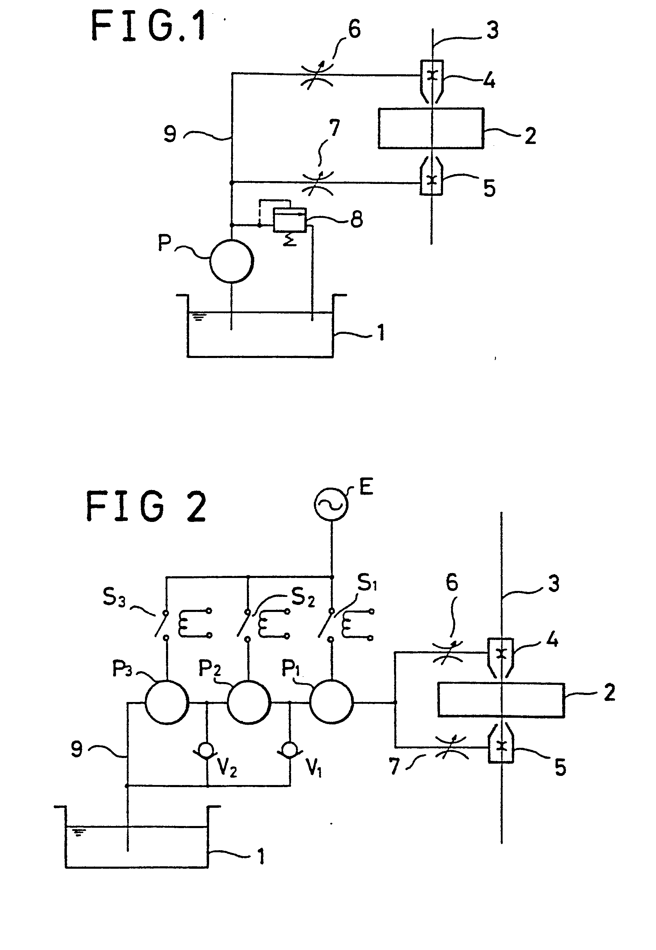

Electric spark forming is performed such that an electrode is slightly spaced apart from a workpiece through a working fluid, and a discharge current having a large number of repetition pulses is generated to melt the workpiece with the discharge energy. In order to increase a working speed in electric spark forming, the pressure of the working fluid and its flow rate must be increased. On the other hand, in order to perform electric spark forming with high precision, the pressure and flow rate of the working fluid must be decreased. The working fluid pressure and flow control is conventionally performed by the arrangement shown in Fig. 1. Reference numeral 2 denotes a workpiece; 3, a wire electrode; and 4 and 5, nozzles for spraying the working fluid in a gap as the electric spark forming region between the workpiece 2 and the wire electrode 3. The working fluid is pumped by a pump P from a working fluid tank 1 and supplied to the nozzles 4 and 5 through restrictors 6 and 7. Reference numeral 8 denotes a relief valve which is opened when the pressure of the working fluid supplied from the pump P to the nozzles 4 and 5 exceeds a predetermined pressure, thereby returning the working fluid to the tank 1 and hence maintaining the working fluid supply pressure to be constant.

When electric spark forming is performed in the arrangement described above, the restrictors 6 and 7 are controlled to adjust the flow rate and the pressure of the working fluid. For this reason, the pump P has a high power so as to supply the working fluid at a

high pressure and a high flow rate. At the same time, even if the working fluid is used at a low pressure and a low flow rate, energy consumption of the pump P is almost the same as in the case wherein the working fluid is supplied at a high pressure and a high flow rate, thereby increasing energy loss. In addition, since the energy consumption of the pump P is high, the temperature of the working fluid is increased to degrade forming precision.

Disclosure of Invention

It is an object of the present invention to provide a working fluid supply apparatus in electric spark forming, wherein energy consumption loss of a working fluid supply pump in an electric discharge machine is decreased, and the pressure of the working fluid can be controlled in accordance with the electric spark forming conditions.

In order to achieve the above object of the present invention, there is provided a working fluid supply apparatus in an electric discharge machine, wherein a plurality of pumps are disposed in tandem with each other along a pipe for supplying a working fluid from a working fluid tank to an electric spark forming region, pipes are bypassed from pipes between the pumps through valves, respectively, and the pumps are driven from a downstream pump to an upstream pump when the pressure of the working fluid is increased. The valves are closed while the upstream pump is operated, thereby adjusting the working fluid pressure in accordance with the number of operating pumps.

As described above, since the pumps are connected in tandem with each other, and the number of operating pumps can be selected in accordance with a required pressure of the working fluid, energy consumption loss of the pumps can be prevented, and an increase in temperature of the working fluid can be prevented, thereby preventing degradation of working precision.

0162926

In addition, even if the pressure of the working fluid is increased, its flow rate will not be proportionally increased and the working fluid will not overflow from a working fluid tray. For this reason, a large working fluid tray need not be prepared.

Brief Description of Drawings

Fig. 1 is a diagram showing a conventional working fluid supply apparatus in an electric discharge machine, and Fig. 2 is a diagram of a working fluid supply apparatus in an electric discharge machine according to an embodiment of the present invention.

Best Mode of Carrying Out the Invention

Fig. 2 is a diagram of a working fluid supply apparatus in an electric discharge machine according to an embodiment of the present invention. Reference numeral 1 denotes a working fluid tank; 2, a workpiece; 3, a wire electrode; 4 and 5, nozzles for supplying the working fluid to an electric spark forming region, respectively; 6 and 7, restrictors, respectively; and 9, a pipe. Reference symbols P1 to P3 denote pumps connected in tandem with each other, respectively; V1 and V2, check valves; S1 to S3, electromagnetic switches, respectively; and E, an AC power source. In the apparatus having the arrangement described above, when the pressure of the working fluid is set at a low pressure, the electromagnetic switch S1 is turned on, and only the pump P1 is operated. In this case, the working fluid is supplied from the tank 1 to the nozzles 4 and 5 through the check valve V1, the pump P1, and the restrictors 6 and 7. In order to increase the pressure of the working fluid, the electromagnetic switches S1 and S2 are turned on to operate the pumps P1 and P2, respectively. As a result, the working fluid is supplied from the tank 1 to the nozzles 4 and 5 through the check valve V2, the pump P2, the pump P1, and the restrictors 6 and 7. In this case, the pressure of the working fluid is substantially twice that in the case wherein only one pump is operated. When the pumps P1 and P2 are operated, the fluid in the pipe 9 between the pumps P1 and P2 has a higher pressure than that in the tank 1, so that the check valve V1 is closed to prevent the fluid from flowing into the check valve V1.

In order to further increase the pressure of the working fluid, the electromagnetic switch S3 is also turned on to operate the pumps P1, P2 and P3. The working fluid is supplied from the tank 1 to the nozzles 4 and 5 through the pumps P3, P2 and P1, and the restrictors 6 and 7. In this case, the pressure of the working fluid is substantially three times that in the case wherein only one pump is operated. The check valves V1 and V2 are closed while the pumps P1, P2 and P3 are being operated.

Since the pumps P1 to P3 are connected in tandem with each other and operated, the flow rate will not be increased even if all the pumps are operated to supply a high-pressure working fluid to the electric spark forming region, thereby preventing the working fluid from overflowing the working fluid tray.

In the above embodiment, the check valves V1 and V2 are used. However, electromagnetic valves can be used in place of the check valves V1 and V2. In this case, the electromagnetic valves can be interlocked with the electromagnetic switches. More particularly, an electromagnetic valve B1 is used in place of the check valve V1, and an electromagnetic valve B2 is used in place of the check valve V2. When the electromagnetic switch S2 is turned on, the electromagnetic valve B1 is synchronously operated to close the pipe. However, when an electromagnetic switch S3 is turned on, the electromagnetic valve B2 is synchronously operated to close the pipe. In this case, when the electromagnetic switch S1 is turned on, the working fluid is supplied from the tank 1 to the nozzles 4 and 5 through the electromagnetic valve B1, the pump P1 and the restrictors 6 and 7. However, when the electromagnetic switches S1 and S2 are turned on, the electromagnetic valve B1 is closed, and the working fluid is supplied from the tank 1 to the nozzles 4 and 5 through the electromagnetic valve B2, the pumps P2 and P1 and the restrictors 6 and 7. When the electromagnetic switches S1, S2 and S3 are turned on, the electromagnetic valves B1 and B2 are closed, and the working fluid is supplied from the tank 1 to the nozzles 4 and 5 through the pumps P3, P2 and P1 and the restrictors 6 and 7.

In the above embodiment, the electromagnetic switches S1 to S3 can be replaced with relays which control the flow path of the working fluid.

0162926

# C L A I M S

1. A working fluid supply apparatus in an electric discharge machine, wherein a plurality of pumps are disposed in tandem with each other along a pipe for supplying a working fluid from a working fluid tank to an electric spark forming region, pipes are bypassed from pipes between said pumps through valves, respectively, said pumps are selectively operated, and said valves are closed while upstream pumps among said pumps are operated.

2. An apparatus according to claim 1, wherein said valves comprise check valves, respectively.

3. An apparatus according to claim 1, wherein said valves comprise electromagnetic valves, respectively.

4. An apparatus according to claim 3, wherein said electromagnetic valves are interlocked with operation switches for the upstream pumps of the pipes to which said electromagnetic valves are connected, said electromagnetic valves being arranged to close the pipes when said operation switches are turned on.

FIG.1

FIG 2

# INTERNATIONAL SEARCH REPORT

International Application No. PCT/JP84/00914 0162926

## I. CLASSIFICATION OF SUBJECT MATTER (If several classification symbols apply, indicate all) ²

According to International Patent Classification (IPC) or to both National Classification and IPC

Int. Cl⁴ B23H 7/36

## II. FIELDS SEARCHED

| Minimum Documentation Searched ⁴ | |
|---|---|
| Classification System | Classification Symbols |
| IPC | B23H 1/10, 3/10, 5/14, 7/36 |

| Documentation Searched other than Minimum Documentation to the Extent that such Documents are Included in the Fields Searched ⁵ | |
|---|---|
| Jitsuyo Shinan Koho | 1926 – 1984 |
| Kokai Jitsuyo Shinan Koho | 1971 – 1984 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| A | JP, B1, 37-7296 (Japax Kabushiki Kaisha), 5 July 1962 (05. 07. 62) (Family nashi) | 1 – 4 |

* Special categories of cited documents: ¹⁶
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search ² | Date of Mailing of this International Search Report ² |
|---|---|
| January 7, 1984   (07. 01. 85) | January 21, 1985   (21. 01. 85) |
| International Searching Authority ¹ | Signature of Authorized Officer ²⁰ |
| Japanese Patent Office | |

Form PCT/ISA/210 (second sheet) (October 1981)